# EUROPEAN PATENT APPLICATION

(11) **EP 4 191 560 A1**
(43) Date of publication of application: **07.06.2023**
(21) Application number: 22211227.8
(22) Date of filing: 02.12.2022
(51) Int. Cl.: G08G 5/00, B64D 43/00, G01C 5/00, G01C 5/06

(54) **AUTOMATIC SELECTION OF BEST AIR DATA SOURCE FOR AIRCRAFT**

(30) Priority: 03.12.2021 US 202163285793 P
(71) Applicant: Bombardier Inc., Dorval QC H4S1Y9 (CA)
(72) Inventor: DOYON, Richard, Wichita Kansas, KS 67205 (US); ASSELIN, Mario, Quebec, J0R 1B0 (CA)
(74) Representative: HGF

(57) **Abstract**

A system and method for carrying out an automatic selection of the best air data source on an aircraft, through a voting scheme, for determining aircraft altitude and present that information to the pilot. Once this is done, statistical analysis can be done to look at the 'root mean square' (RMS) of the possible errors to ensure the airplane remains within a maximum tolerance respecting Reduced Vertical Separation Minima (RVSM) requirements. The aircraft can therefore travel faster cruise speed at higher altitude, thus reducing travel time, while still respecting RVSM requirements

## Description

### TECHNICAL FIELD

The disclosure relates generally to aircraft, and more particularly to a system and method for selecting and ranking accuracies of pressure altitude sensing devices of an aircraft operating in a Reduced Vertical Separation Minima (RVSM) airspace.

### BACKGROUND

Operating regulations require that the airplane operating into Reduced Vertical Separation Minima (RVSM) airspace be capable of maintaining an altitude within a maximum deviation of 200 ft from a target value. The pilot is usually responsible to select an altitude source from the multiple sources available. RVSM requirements typically require a minimum of two independent sources. As there is typically no way of knowing which source the pilot will use, when the RVSM analysis is done, one must assume that the most adverse conditions apply to the selected air data probe.

Airplane manufacturers can carry out an analysis of all possible sources of errors on the probes, performs a 'root sum square' of all the errors and must demonstrate that the airplane, no matter which air data probe is selected, will remain within the 200 ft tolerance. The errors are typically larger at higher Mach numbers (close to Mach 1.0).

There is therefore a need to improve accuracy of air data systems at higher Mach numbers and allow faster cruise speed while remaining compliant with RVSM requirements.

### SUMMARY

In one aspect, the disclosure describes method for selecting and ranking accuracies of a plurality of pressure altitude sensing devices of an aircraft operating in a Reduced Vertical Separation Minima (RVSM) airspace, and displaying readings of said pressure altitude sensing devices. The method comprises:
receiving pressure altitudes from each of the pressure altitude sensing devices;
calculating, using a data processing device, a reference altitude using signals from aircraft sensors other than the plurality of pressure altitude sensing devices;
comparing each of the pressure altitudes with the reference altitude;
ranking each of the pressure altitude sensing devices based on the difference between each of the pressure altitudes and the reference altitude, a higher rank being associated with a smaller difference between the pressure altitudes and the reference altitude;
prioritizing display of the pressure altitudes based on said ranking; and
displaying at least a portion of said pressure altitudes on a plurality of cockpit displays in accordance with the prioritization.

The method may comprise the step of:
calculating an error tolerance associated with an overall altimetry system error based only on a highest ranking pressure altitude sensing device of the plurality of pressure altitude sensing devices.

The steps of comparing, ranking and prioritizing may be done at a predetermined frequency.

The frequency can be between 0.5 and 1.5 Hz.

The pressure altitude sensing devices can include air data probes.

In some embodiments of the method, the pressure altitude sensing devices can include four air data probes distributed over a surface of a nose of the aircraft.

In some embodiments of the method, the aircraft sensors other than the plurality of pressure altitude sensing devices comprise GPS signal receivers.

In some embodiments of the method, the plurality of cockpit displays comprises a pair of primary flight displays and an integrated standby instrument.

In another aspect, the disclosure describes a system for selecting and ranking accuracies of a plurality of pressure altitude sensing devices of an aircraft operating in a Reduced Vertical Separation Minima (RVSM) airspace, and displaying readings of said pressure altitude sensing devices, the system comprising:
the plurality of pressure altitude sensing devices;
a second plurality of aircraft sensors other than the plurality of pressure altitude sensing devices;
a plurality of cockpit displays;
at least one processor in electronic communication with the plurality of pressure altitude sensing devices, the second plurality of aircraft sensors other than the plurality of pressure altitude sensing devices and the plurality of cockpit displays;
a memory in electronic communication with the at least one processor, wherein the memory comprises programming code for execution by the at least one processor, and the programming code is configured to
receive pressure altitudes from each of the pressure altitude sensing devices;
calculate a reference altitude using signals from the aircraft sensors other than the plurality of pressure altitude sensing devices;
compare each of the pressure altitudes with the reference altitude;
rank each of the pressure altitude sensing devices based on the difference between each of the pressure altitudes and the reference altitude, a higher rank being associated with a smaller difference between the pressure altitudes and the reference altitude;
prioritize display of the pressure altitudes based on said ranking; and
display at least a portion of said pressure altitudes on the plurality of cockpit displays in accordance with the prioritization.

The programming code may be further configured to calculate an error tolerance associated with an overall altimetry system error based only on a highest ranking pressure altitude sensing device of the plurality of pressure altitude sensing devices.

The programming code may be further configured to compare, rank and prioritize at a predetermined frequency.

In some embodiments of the system, the frequency is between 0.5 and 1.5 Hz.

In some embodiments of the system, the pressure altitude sensing devices comprise air data probes.

In some embodiments of the system, the pressure altitude sensing devices comprise four air data probes distributed over a surface of a nose of the aircraft.

In some embodiments of the system, the aircraft sensors other than the plurality of pressure altitude sensing devices comprise GPS signal receivers.

In some embodiments of the system, the plurality of cockpit displays comprises a pair of primary flight displays and an integrated standby instrument.

In another aspect, the disclosure describes a non-transitory computer readable medium including instructions to command a processor to:
receive pressure altitudes from each of a plurality of pressure altitude sensing devices of an aircraft operating in a Reduced Vertical Separation Minima (RVSM) airspace;
calculate a reference altitude using signals from aircraft sensors other than the plurality of pressure altitude sensing devices;
compare each of the pressure altitudes with the reference altitude;
rank each of the pressure altitude sensing devices based on the difference between each of the pressure altitudes and the reference altitude, a higher rank being associated with a smaller difference between the pressure altitudes and the reference altitude;
prioritize display of the pressure altitudes based on said ranking; and
command a plurality of cockpit displays to display at least a portion of said pressure altitudes in accordance with the prioritization.

The instructions can further calculate an error tolerance associated with an overall altimetry system error based only on a highest ranking pressure altitude sensing device of the plurality of pressure altitude sensing devices.

The instructions can further compare, rank and prioritize at a predetermined frequency.

Embodiments can include combinations of the above features.

Further details of these and other aspects of the subject matter of this application will be apparent from the detailed description included below and the drawings.

### DESCRIPTION OF THE DRAWINGS

Reference is now made to the accompanying drawings, in which:
FIG. 1 is a top plan view of an exemplary aircraft comprising a system for selecting and ranking accuracies of pressure altitude sensing devices;
FIG. 2A and AB is a opposite front partial perspective views of an aircraft illustrating locations of pressure altitude sensing devices on an exterior of the aircraft of FIG. 1;
FIG. 3A and 3B are flow diagrams illustrating a method for selecting and ranking accuracies of pressure altitude sensing devices of the system of FIG. 1;
FIG. 4 is table illustrating a mapping of air data sources to different cockpit displays;
FIG. 5A and 5B are front perspective and detailed views respectively of cockpit control panels of the aircraft of FIG. 1, and, more precisely, a reversion switch panel;
FIG. 6 is a front view of a primary flight display of the aircraft of FIG. 1, illustrating an air data source reversion indication;
FIG. 7A and 7B are front perspective and detailed views respectively of cockpit display panels of the aircraft of FIG. 1, and, more precisely, an integrated standby instrument panel;
FIG. 8 is a flow diagram illustrating a method for selecting and ranking accuracies of pressure altitude sensing devices, and displaying outputs of the ranking of the system of FIG. 1

### DETAILED DESCRIPTION

The following disclosure relates to a system and method for carrying out an automatic selection of the best air data source (through a voting scheme) for determining aircraft altitude and present that information to the pilot. Once this is done, statistical analysis can be done to look at the 'root mean square' (RMS) of the possible errors to ensure the airplane remains within the 200 ft maximum tolerance of RVSM requirements. The root mean square-based variability should be smaller compared to a variability derived from a root sum square method based on all of the sensing devices, since the RMS method is limited to one sensing device instead of all the devices. Such a system and method can help improve altitude determination accuracy at higher Mach numbers and allow faster cruise speed while remaining compliant to RVSM requirements.

Aspects of various embodiments are described through reference to the drawings.

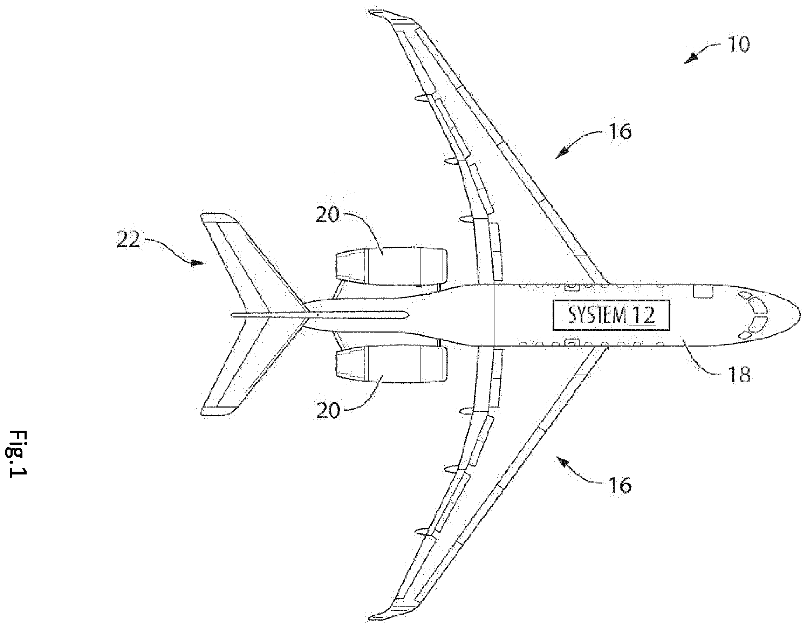

FIG. 1 is a top plan view of an exemplary aircraft 10 comprising system 12 for carrying out an automatic selection of the best air data source (through a voting scheme) for determining aircraft altitude and present that information to the pilot. Aircraft 10 can be any type of aircraft such as corporate (e.g., business jet), private, commercial and passenger aircraft suitable for civil aviation. For example, aircraft 10 can be a narrow-body, twin-engine jet airliner or may be an ultra-long range business jet. Aircraft 10 can be a fixed-wing aircraft. Aircraft 10 can comprise wings 16, fuselage 18, one or more engines 20 and empennage 22.

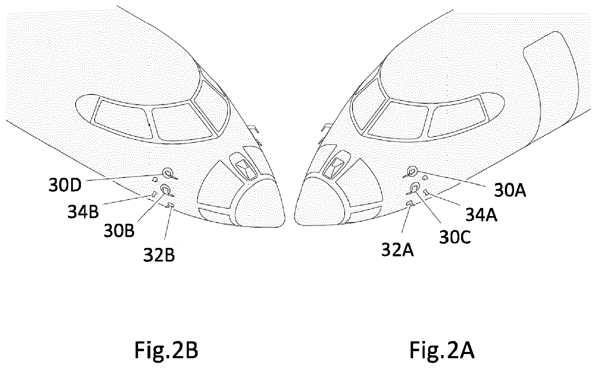

FIG. 2A and 2B show elements of the air data system of the aircraft 10. The air data system comprises pressure altitude sensing devices 30A,30B,30C,30D, such as independent air data smart probes (ADSPs) to measure air pressure (dynamic and static) and angle of attack (AOA), AOA vanes 32A,32B and total air temperature (TAT) probes 34A,34B. The ADSPs, the AOA vanes, and the TAT probes are installed on each side of the aircraft 10 nose, below the flight compartment windows. The use of ADSPs can eliminate the need for separate static ports and air data computers, but other types of pressure altitude sensing devices can be used.

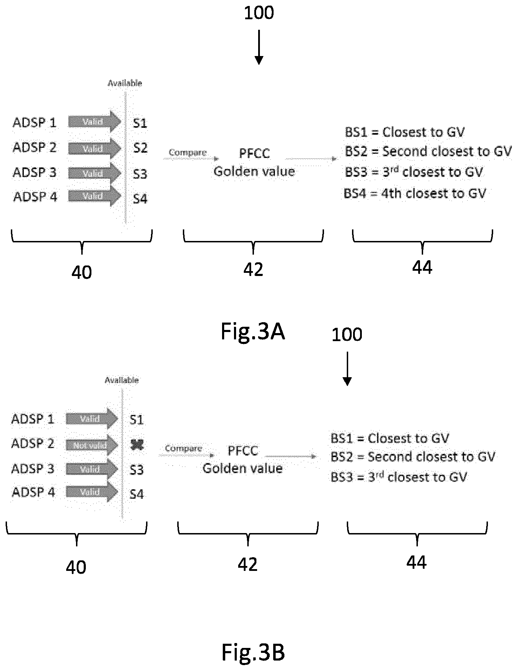

FIG. 3A and 3B are flow diagrams illustrating a method 100 for selecting and ranking accuracies of a plurality of pressure altitude sensing devices of an aircraft operating in a Reduced Vertical Separation Minima (RVSM) airspace. Method 100 can be performed using system 12 or using other suitable systems. Aspects of system 12 described herein are also applicable to method 100. The following description of method 100 is presented in reference to reference numerals illustrated in FIG. 3A and 3B. Method 100 can comprise:
receiving pressure altitudes from each of the pressure altitude sensing devices (see step 40);
calculating, using a data processing device, a reference altitude using signals from aircraft sensors other than the plurality of pressure altitude sensing devices, the reference altitude can be designated to be a "golden value" generated by the primary flight control computer (PFCC);
comparing each of the pressure altitudes with the reference altitude (see step 42);
ranking each of the pressure altitude sensing devices based on the difference between each of the pressure altitudes and the reference altitude, a higher rank being associated with a smaller difference between the pressure altitudes and the reference altitude (see step 44);

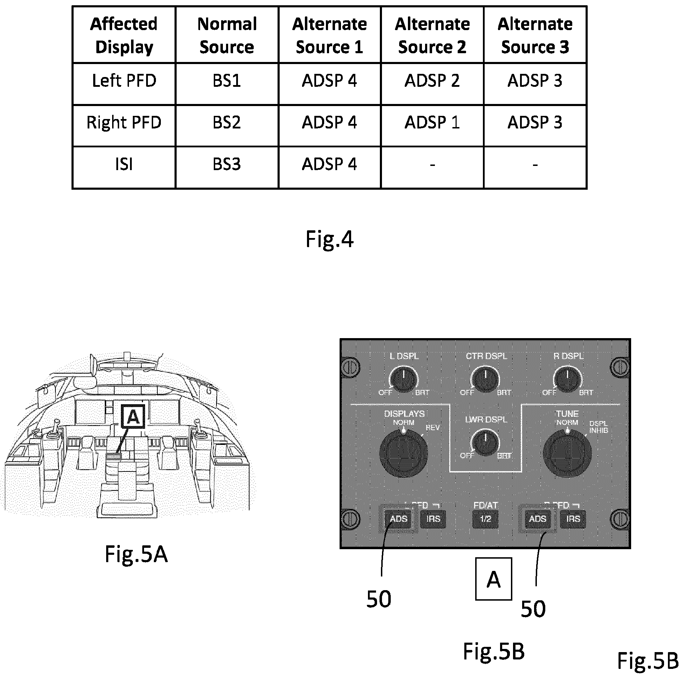

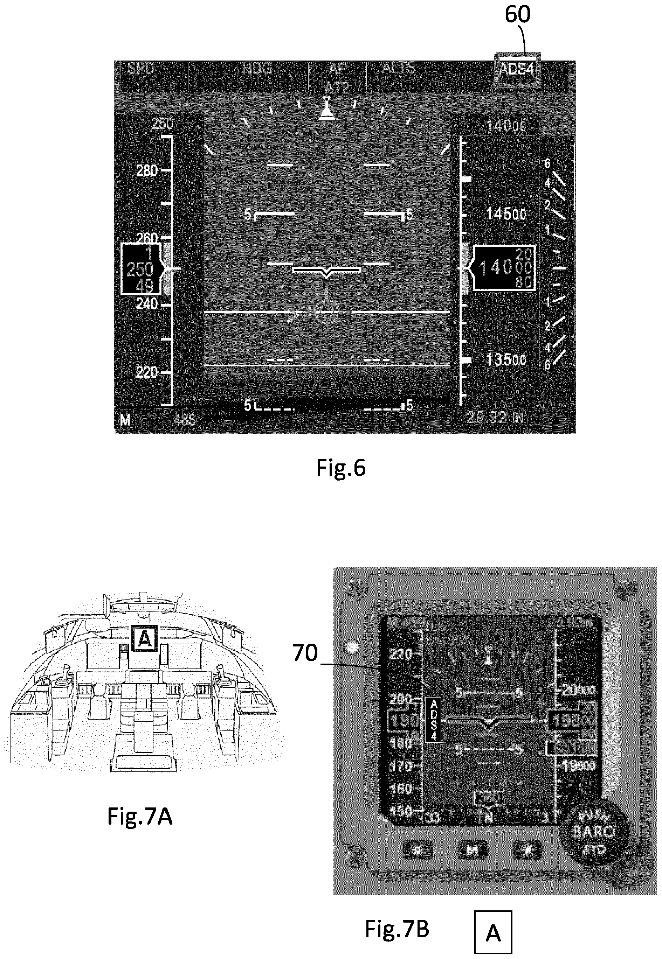

The reference altitude value (Golden value as shown in the figures) is calculated internally by the Fly-By-Wire system, or PFCC, and represents the truest altimetric value in relation to the sensing provided by the aircraft systems. The aircraft systems that provide inputs for generating the reference altitude value can include, for example a Global Positioning System (GPS). The reference altitude can also be derived from temperature based synthetic pressure computation systems or similar systems for example, such as those described in US patent US 6757624. The reference altitude value is transmitted to the avionics suite. The avionics suite can then compare this reference altitude or Golden value against actual individual Air Data System Probe data. By simple arithmetic, the avionics will determine which ADSP is closest to the Golden Value. This ADSP is then selected as Best Source 1 (BS1). The 2nd best is Best Source 2 (BS2); and so forth for all 4 sources, as shown in Fig. 3A. Fig. 3B illustrates a scenario if one of the ADSPs (ADSP 2) produces invalid data.
The method 100 further comprises steps of prioritizing display of the pressure altitudes based on the above-described ranking, and displaying at least a portion of said pressure altitudes on a plurality of cockpit displays in accordance with the prioritization. A display module within the avionics suite associates the air data sources to different displays as shown in FIG. 4. In some embodiments, this selection or association is done at a frequency between 0.5 Hz and 1.5 Hz, in a preferred embodiment at 1 Hz. If an air data source fails, the affected display (left primary flight display (PFD), right PFD, or the integrated standby instrument (ISI)) automatically switches to an alternate air data source. In some embodiments, the left or right PFD air data source can be changed manually by pressing an associated ADS (air data source) pushbutton 50 on a reversion switch panel as shown in Fig. 5B . Pressing the ADS pushbutton 50 cycles through the air data sources for the affected display. In nominal operations, the scheme is automatic. Following a dark cockpit philosophy, when in this automatic mode, there are no individual Air Data Sources indicated to the crew on the primary flight displays. However, should a failure occur, or the pilot makes a manual selection, then an alternate Air Data Source will be indicated to the pilots using known cockpit level display schemes. An example of a display of an alternate air data source 60 is shown on FIG. 6 on a primary flight display. Another example of a display of an alternate air data source 70 is shown on FIG. 7B on an integrated standby instrument, serving as a backup to the primary flight displays of the cockpit. This display logic is similar to existing data source display practices and can be easily implemented on new systems.

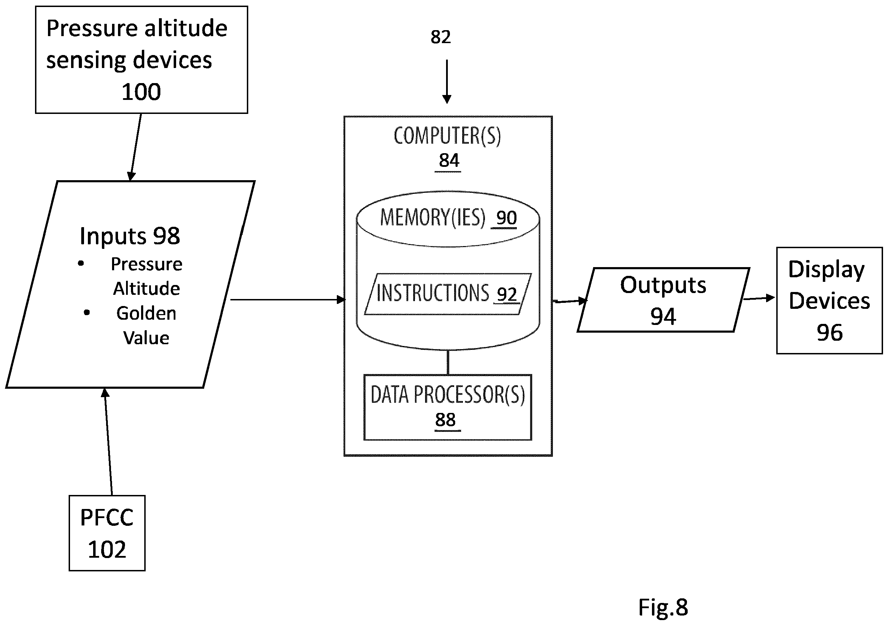

Fig. 8 is a schematic representation of an exemplary system 82 for carrying out the above-described method. In an embodiment, system 82 can be integrated with avionics component(s) of aircraft 10. System 82 can comprise one or more computers 84 (referred hereinafter in the singular) operatively coupled to one or more display devices 86 (referred hereinafter in the singular) of a flight deck of aircraft 10 for example.

Computer 84 can comprise one or more data processors 88 (referred hereinafter in the singular) and one or more computer-readable memories 90 (referred hereinafter in the singular) storing machine-readable instructions 92 executable by data processor 88 and configured to cause data processor 88 to generate one or more outputs 34 (referred hereinafter in the singular). Output 94 can comprise one or more signals for causing display device 96 of aircraft 10 to display the altitude readings. Output 94 can comprise one or more signals for generating any suitable type (e.g., visual, graphical, text-based, aural) of communication or alert/warning to the appropriate individual(s) or device(s).

Computer 84 can receive input(s) 98 in the form of data or information that can be processed by data processor 88 based on instructions 92 in order to generate output 94. For example, inputs 98 can comprise pressure altitude readings from the pressure altitude sensing devices and the reference altitude derived from the PFCC 102. While input 98 is illustrated as being received at computer 84, it is understood that some or all the data of input 98 could instead be stored in memory 90 of computer 84 prior to the execution of the method disclosed herein.

Data processor 88 can comprise any suitable device(s) configured to cause a series of steps to be performed by computer 84 so as to implement a computer-implemented process such that instructions 92, when executed by computer 84 or other programmable apparatus, can cause the functions/acts specified in the methods described herein to be executed. Memory 90 can comprise any suitable known or other non-transitory machine-readable storage medium. Memory 90 can include a suitable combination of any type of computer memory that is located either internally or externally to computer 84. Memory 90 can comprise any storage means (e.g. devices) suitable for retrievably storing machine-readable instructions 92 executable by data processor 88.

Various aspects of the present disclosure can be embodied as apparatus, devices, methods and/or computer program products. Accordingly, aspects of the present disclosure can take the form of an entirely hardware embodiment, an entirely software embodiment or an embodiment combining software and hardware aspects. Furthermore, aspects of the present disclosure can take the form of a computer program product embodied in one or more non-transitory computer readable medium(ia) (e.g., memory 90) having computer readable program code (e.g., instructions 92) embodied thereon. The computer program product can, for example, be executed by computer 84 to cause the execution of one or more methods disclosed herein in entirety or in part. It is understood that, based on the present disclosure, one skilled in the relevant arts could readily write computer program code for implementing the methods disclosed herein.

The above-described selection of a best air data source is also useful from an aircraft operational performance perspective. The RVSM error budget is nominally calculated using a Root Sum Square (RSS) of individual error sources from all the different air data sensors that can contribute to the overall Altimetry System Error (ASE) of an aircraft, as there is no way of knowing which air data source the pilot will be using. Details of this known error budget calculation is shown for example in US patent US6757624 for example. A root sum square method combines the standard uncertainties of more than one contributor (or sensing device) to provide our overall combined uncertainty. The errors are typically larger at higher Mach numbers (close to Mach 1.0). By being able to select the best air data source as described above, and do so at a high enough frequency, the ASE calculation can now use a Root Mean Square (RMS) method, based on the best pressure altitude sensing device for the air data sensing portion of the ASE. The RMS method yields a more accurate determination of the actual performance error, as RMS deviations or errors are a frequently used measure of the differences between reference values (golden values) and a set of measured values. The RMS method therefore yields a higher usable airspeed for the purpose of RVSM envelope whilst meeting ASE requirements.

The above-described system and method can lead to a higher RVSM speed envelope using existing aircraft systems and systems installation (as opposed to costly development of new more accurate air data sensors; tighter installation tolerances and undue burden on operators to maintain aircraft within those installation tolerances). The aircraft can therefore travel faster cruise speed at higher altitude, thus reducing travel time, while still respecting RVSM requirements, where an aircraft must be equipped with at least two operational independent altitude measurement systems.

The above description is meant to be exemplary only, and one skilled in the relevant arts will recognize that changes may be made to the embodiments described without departing from the scope of the invention disclosed. The present disclosure may be embodied in other specific forms without departing from the subject matter of the claims. The present disclosure is intended to cover and embrace all suitable changes in technology. Modifications which fall within the scope of the present invention will be apparent to those skilled in the art, in light of a review of this disclosure, and such modifications are intended to fall within the appended claims. Also, the scope of the claims should not be limited by the preferred embodiments set forth in the examples, but should be given the broadest interpretation consistent with the description as a whole.

## Claims

1. A method for selecting and ranking accuracies of a plurality of pressure altitude sensing devices (30A,30B,30C,30D) of an aircraft (10) operating in a Reduced Vertical Separation Minima (RVSM) airspace, and displaying readings of said pressure altitude sensing devices (30A,30B,30C,30D), the method comprising:
receiving pressure altitudes from each of the pressure altitude sensing devices (30A,30B,30C,30D);
calculating, using a data processing device, a reference altitude using signals from aircraft sensors other than the plurality of pressure altitude sensing devices (30A,30B,30C,30D);
comparing each of the pressure altitudes with the reference altitude;
ranking each of the pressure altitude sensing devices (30A,30B,30C,30D) based on the difference between each of the pressure altitudes and the reference altitude, a higher rank being associated with a smaller difference between the pressure altitudes and the reference altitude;
prioritizing display of the pressure altitudes based on said ranking; and
displaying at least a portion of said pressure altitudes on a plurality of cockpit displays (96) in accordance with the prioritization.

2. The method as defined in claim 1, further comprising the step of:
calculating an error tolerance associated with an overall altimetry system error based only on a highest ranking pressure altitude sensing device of the plurality of pressure altitude sensing devices (30A,30B,30C,30D).

3. The method as defined in claim 1 or 2, wherein the steps of comparing, ranking and prioritizing are done at a predetermined frequency.

4. The method as defined in claim 3, wherein the frequency is between 0.5 and 1.5 Hz.

5. The method as defined in any one of claims 1 to 4, wherein the pressure altitude sensing devices (30A,30B,30C,30D) comprise air data probes.

6. The method as defined in any one of claims 1 to 5, wherein the pressure altitude sensing devices (30A,30B,30C,30D) comprise four air data probes distributed over a surface of a nose of the aircraft (10).

7. The method as defined in ay one of claims 1 to 6, wherein the aircraft sensors other than the plurality of pressure altitude sensing devices (30A,30B,30C,30D) comprise GPS signal receivers.

8. A system (82) for selecting and ranking accuracies of a plurality of pressure altitude sensing devices (30A,30B,30C,30D) of an aircraft (10) operating in a Reduced Vertical Separation Minima (RVSM) airspace, and displaying readings of said pressure altitude sensing devices (30A,30B,30C,30D), the system (82) comprising:
the plurality of pressure altitude sensing devices (30A,30B,30C,30D);
a second plurality of aircraft sensors other than the plurality of pressure altitude sensing devices (30A,30B,30C,30D);
a plurality of cockpit displays (96);
at least one processor (88) in electronic communication with the plurality of pressure altitude sensing devices (30A,30B,30C,30D), the second plurality of aircraft sensors other than the plurality of pressure altitude sensing devices (30A,30B,30C,30D) and the plurality of cockpit displays (96);
a memory (90) in electronic communication with the at least one processor (88), wherein the memory (90) comprises programming code for execution by the at least one processor (88), and the programming code is configured to
receive pressure altitudes from each of the pressure altitude sensing devices (30A,30B,30C,30D);
calculate a reference altitude using signals from the aircraft sensors other than the plurality of pressure altitude sensing devices (30A,30B,30C,30D);
compare each of the pressure altitudes with the reference altitude;
rank each of the pressure altitude sensing devices (30A,30B,30C,30D) based on the difference between each of the pressure altitudes and the reference altitude, a higher rank being associated with a smaller difference between the pressure altitudes and the reference altitude;
prioritize display of the pressure altitudes based on said ranking; and
display at least a portion of said pressure altitudes on the plurality of cockpit displays (96) in accordance with the prioritization.

9. The system (82) as defined in claim 8 wherein the programming code is further configured to
calculate an error tolerance associated with an overall altimetry system error based only on a highest ranking pressure altitude sensing device of the plurality of pressure altitude sensing devices (30A,30B,30C,30D).

10. The system (82) as defined in claim 8 or 9, wherein the programming code is further configured to compare, rank and prioritize at a predetermined frequency.

11. The system (82) as defined in claim 10, wherein the frequency is between 0.5 and 1.5 Hz.

12. The system (82) as defined in any one of claims 8 to 11, wherein the pressure altitude sensing devices (30A,30B,30C,30D) comprise air data probes.

13. The system (82) as defined in any one of claims 8 to 12, wherein the pressure altitude sensing devices (30A,30B,30C,30D) comprise four air data probes distributed over a surface of a nose of the aircraft (10).

14. The system (82) as defined in ay one of claims 8 to 13, wherein the aircraft sensors other than the plurality of pressure altitude sensing devices (30A,30B,30C,30D) comprise GPS signal receivers.

15. The system (82) as defined in ay one of claims 8 to 14, wherein the plurality of cockpit displays (96) comprises a pair of primary flight displays and an integrated standby instrument.
